# EUROPEAN PATENT SPECIFICATION

(11) **EP 3 089 332 B1**
(45) Date of publication and mention of the grant of the patent: **23.10.2019**
(21) Application number: 15305658.5
(22) Date of filing: 29.04.2015
(51) Int. Cl.: H02K 7/00, H02K 7/09, F16C 32/04, H02K 1/04, H02K 11/225

(54) **ROTARY MACHINE**
ROTATIONSMASCHINE
MACHINE ROTATIVE

(43) Date of publication of application: 02.11.2016
(73) Proprietor: SKF MAGNETIC MECHATRONICS, 27950 Saint-Marcel (FR)
(72) Inventor: Carrasco, Eduardo, 27920 Saint-Etienne Sous Bailleul (FR)
(74) Representative: Lavoix

(56) References cited:
- WO-A1-2014/113829
- WO-A1-2015/052962
- DE-A1-102010 064 215
- US-A- 4 180 946
- US-A1- 2008 185 928

## Description

### TECHNICAL FIELD OF THE INVENTION

The invention concerns a rotary machine comprising a shaft and a housing, the shaft being rotatable with respect to the housing thanks to at least one axial magnetic bearing.

### BACKGROUND OF THE INVENTION

Some types of rotary machines, such as fly wheels, comprise a rotor, a stator and an axial magnetic bearing to control the axial position of the rotor with respect to the stator. Such machines have some drawbacks caused by the axial magnetic bearing which can impact the performances of the axial magnetic bearing itself or other components of the machine.

Such rotary machines with an axial magnetic bearing are known from US 4 180 946 A and WO2014/113829 A1.

The axial magnetic bearing includes a magnetic actuator which generates a magnetic field. The leaks of this magnetic field to other magnetic components of the machine that are close to the actuator reduce the efficiency or the load capacity of the magnetic actuator.

Magnetic position sensors may be disturbed by the magnetic field leaking from the actuator, leading to false position sensing. Motors and radial magnetic bearings can also be affected by the magnetic field leaking from the axial bearing.

To avoid disturbances caused by the magnetic field leaks, it is known to provide shields between the magnetic actuator of the axial bearing and the other magnetic components of the rotary machine. It is also known to increase the magnetic distance between the magnetic actuator of the axial bearing and the other magnetic components, using air or non-magnetic components.

Besides, it is known to integrate a secondary coil in series with the coil of the axial magnetic actuator to reduce the disturbing magnetic field generated by the actuator by creating an inverted magnetic field with the same magnitude using the secondary coil.

These solutions imply dimensional increase of the rotary machine because of the integration of additional components, and subsequent supplementary costs and dimensional issues.

### SUMMARY OF THE INVENTION

The invention aims at providing an improved rotary machine.

To this end, the invention concerns a rotary machine comprising a shaft and a housing, the shaft being rotatable with respect to the housing thanks to at least one axial magnetic bearing including a magnetic thrust disc coupled in rotation to the shaft and a magnetic actuators fixed to the housing and located axially around the magnetic thrust disc, wherein the rotary machine comprises a magnetically insulating insert mounted between the magnetic thrust disc and the shaft so that there is no contact between the magnetic thrust disc and the shaft.

Thanks to the invention, the magnetic disturbances caused by the magnetic actuator of the axial magnetic bearing are reduced in a simpler and cheaper way than in known rotary machines. The magnetic path between the thrust disc and the shaft is interrupted, thus avoiding extension of the leaking magnetic field towards other magnetic components of the rotary machine via the shaft. Moreover, the reduction of magnetic leaks improves the performance of the axial magnetic bearing.

According to further aspects of the invention which are advantageous but not compulsory, such a rotary machine may incorporate one or several of the following features:
- The magnetically insulating insert is made of material of low magnetic properties.
- The magnetically insulating insert is made of a material having a magnetic permeability equal or inferior to 1,256 × 10⁻⁶ H/m.
- The magnetically insulating insert is made of low magnetic permeability stainless steel.
- The magnetically insulating insert is made of 316L or 904L.
- The magnetically insulating insert is made of a non-ferrous material.
- The magnetically insulating insert is made of aluminum.
- The magnetically insulating insert is made of a plastic material.
- The magnetically insulating insert is made of a ceramic material.
- The shaft comprises a central threaded bore in which a fastening bolt is inserted, whereas the magnetically insulating insert and the thrust disc each comprise a central hole for passing the fastening bolt.
- The shaft comprises a central threaded bore in which a fastening bolt is inserted, whereas the magnetically insulating insert comprises a central hole for passing the fastening bolt, whereas the magnetically insulating insert comprises a radially outwardly extending shoulder, and whereas the thrust disc is mounted on an outer peripheral surface of the insert and against the shoulder.
- The magnetically insulating insert is sleeve-shaped and mounted around an outer peripheral surface of the shaft, whereas the magnetically insulating insert comprises a radial outwardly shoulder, and whereas the thrust disc is mounted on an outer peripheral surface of the magnetically insulating insert and against the shoulder.
- The rotary machine comprises at least one magnetic rotation sensing system including a magnetic rotor coupled in rotation to the shaft and a magnetic stator fixed to the housing.
- The rotary machine comprises at least one radial magnetic bearing including a magnetic rotor coupled in rotation to the shaft and a magnetic stator fixed to the housing.
- The rotary machine comprises at least one rolling bearing for allowing rotation of the shaft with respect to the housing in case of failure of the axial magnetic bearing.

### BRIEF DESCRIPTION OF THE DRAWINGS

The invention will now be explained with reference to the annexed figures, as an illustrative example. In the annexed figures:
- figure 1 is a sectional view of a rotary machine according to the prior art;
- figure 2 shows a magnetic field generated by a magnetic actuator in the rotary machine of the prior art;
- figure 3 is a sectional view similar to figure 1, of a rotary machine according to a first embodiment of the invention;
- figure 4 shows a magnetic field generated by a magnetic actuator in the rotary machine of figure 3;
- figure 5 is a view similar to figure 3, of a rotary machine according to a second embodiment of the invention;
- figure 6 is a view similar to figure 3, of a rotary machine according to a third embodiment of the invention.

### DETAILED DESCRIPTION OF SOME EMBODIMENTS

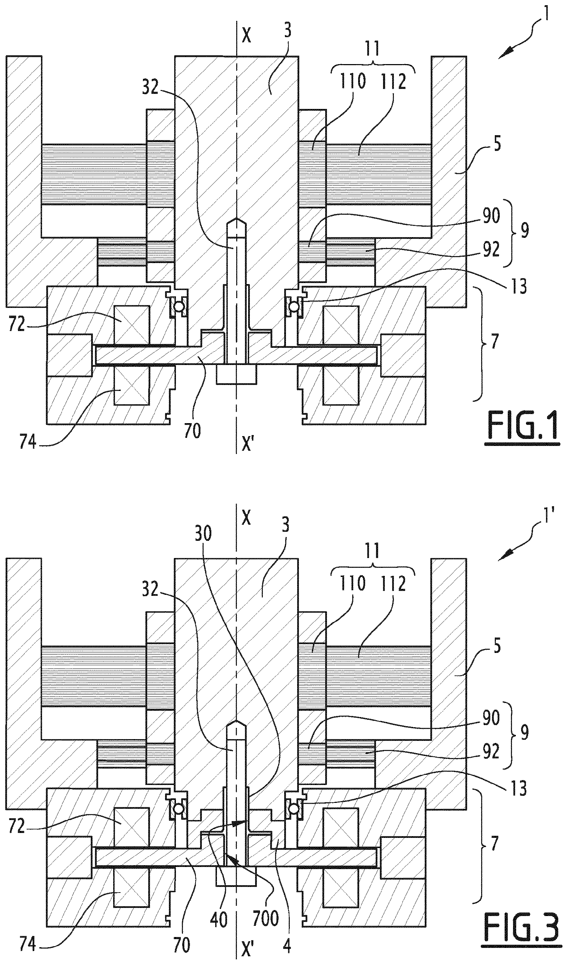

A rotary machine 1 according to the prior art is represented on figure 1. The rotary machine 1 comprises a shaft 3 and a housing 5. The shaft 3 is rotatable with respect to the housing 5 thanks to an axial magnetic bearing 7, which includes a magnetic thrust disc 70, which is mounted on the shaft 3 and coupled in rotation to the shaft 3. The thrust disc 70 is centered on a central axis X-X', which is also the rotation axis of the shaft 3 with respect to the housing 5. The axial magnetic bearing 7 also includes magnetic actuators 72 and 74, which are fixed on the housing 5 and located axially around the thrust disc 70.

In this description, the adjectives "axially", "axial", "radially", and "radial" are used in reference to the central axis X-X'.

The rotary machine 1 also comprises a magnetic rotation sensing system 9 which includes a magnetic rotor 90 coupled in rotation to the shaft 3 and a magnetic stator 92 fixed to the housing 5. The sensing system 9 is axially shifted along axis X-X' with respect to the axial magnetic bearing 7.

The rotary machine 1 also comprises a radial magnetic bearing 11 which includes a magnetic rotor 110 coupled in rotation to the shaft 3 and a magnetic stator 112 fixed to the housing 5. The radial bearing 11 is shifted axially from the sensing system 9 and away from the axial bearing 7.

The rotary machine 1 also comprises a rolling bearing 13 for allowing rotation of the shaft 3 with respect to the housing 5 in case of failure of the axial magnetic bearing 7, for example if an electrical power cut occurs. The rolling bearing 13 may be of any type, such as a ball bearing, a needle bearing or a roller bearing. The rotary machine 1 may comprise more than one rolling bearing 13.

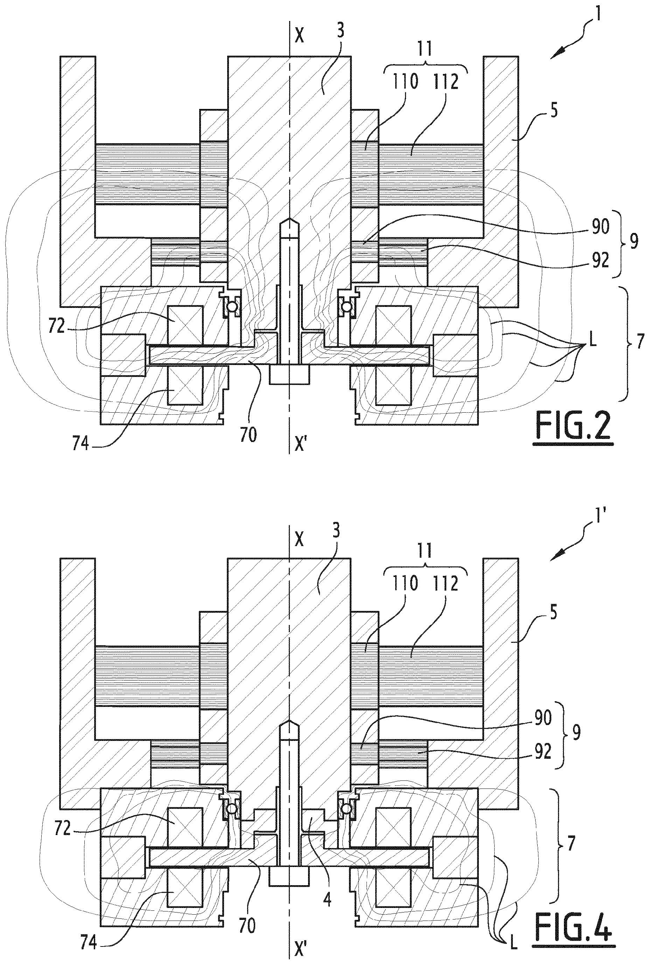

A shown on figure 1, the thrust disc 70 is directly mounted on the shaft 3, and a direct contact exists between the thrust disc 70 and the shaft 3. The shaft 3 is made of a metallic material which is magnetized by the surrounding magnetic field generated by the actuator 72, as shown on figure 2. The magnetic field generated by the actuator 72 is represented by field lines L which pass in the thrust disc 70 and in the shaft 3 via the contact between the shaft 3 and the thrust disc 70. The magnetic field generated by the actuator 74 is less disturbing for the other components of the rotary machine 1 and is not represented for the sake of clarity.

Via the shaft 3, the field lines L also pass in the sensing system 9 and the radial bearing 11. This provokes inaccuracies in the rotation detection made by the sensing system 9, and an efficiency loss of the axial bearing 9. The field lines L which pass in the radial bearing 11 generate a "negative stiffness" which creates a force between the rotor 110 and the stator 112 which disturbs operation of the radial bearing 11.

To solve this issue, as represented on figure 3, a rotary machine 1' according to the invention comprises a magnetically insulating insert 4 which is mounted between the thrust disc 70 and the shaft 3 so that there is no contact between the thrust disc 70 and the shaft 3. The term "magnetically insulating" means that the insert 4 interrupts the magnetic path between the thrust disc 70 and the shaft 3 so that the magnetic field leaked in the thrust disc 70 does not pass into the shaft 3 and into the sensing system 9 and the radial bearing 11.

The magnetic field generated by the magnetic actuator 72 in the rotary machine 1' does not pass into the shaft 3, as shown by the field lines L' represented on figure 4, which are concentrated around the actuator elements 72 and 74. The field lines L' do not pass in the sensing system 9 and the radial bearing 11. Inaccuracies in the rotation detection are therefore avoided. There is also fewer disturbances in the radial bearing 11, and the efficiency of the axial bearing 7 is improved, as there are less leaks of magnetic field generated by the magnetic actuator 72.

The insert 4 is preferably made of a material of low magnetic properties, so that the insert 4 more efficiently insulates the thrust disc 70 from the shaft 3. The term "low magnetic properties" denotes that the material of the insert 4 has a low ability to magnetize itself. The insert 4 has at least magnetic properties which are lower than the magnetic properties of the shaft 3.

The magnetic properties of the material of the insert 4 may be defined by its magnetic permeability. Magnetic permeability is the measure of the ability of a material to support the formation of a magnetic field within itself. In other words, permeability corresponds to the degree of magnetization that a material obtains in response to an applied magnetic field. A low magnetic permeability means that a material will be of low magnetic properties.

The magnetic permeability of the material of the insert 4 may be equal or inferior to 1,256 × 10⁻⁶ H/m. The insert 4 is preferably made of a low magnetic permeability stainless steel, such as 316L or 904L. Alternatively, the insert 4 may be made of a non-ferrous material, such as aluminum, or a plastic material, or a ceramic material.

The shaft 3 comprises a central threaded bore 30 in which a fastening bolt 32 is inserted. The fastening bolt 32 may also be made of a low magnetic permeability material, such as for example 316L steel. The insert 4 and the thrust disc 70 each comprise a respective central hole 40 and 700 for passing the fastening bolt 32. The insert 4 and the thrust disc 70 are therefore fastened to the shaft 3 by the bolt 32.

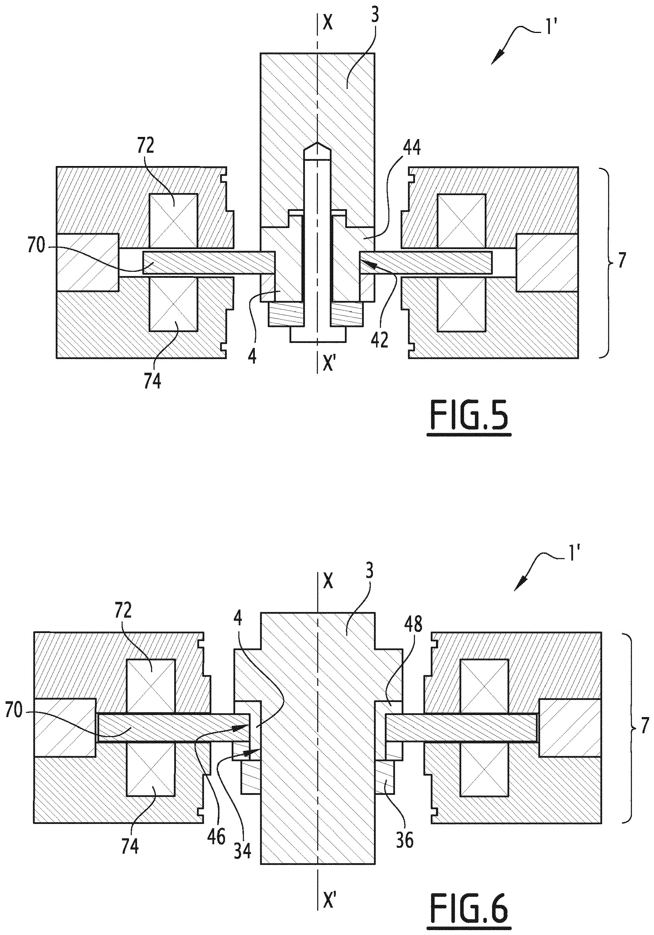

A second and a third embodiment of the invention are respectively represented on figures 5 and 6. In these embodiments, elements common to the first embodiment have the same references and work in the same way. Only the differences with respect to the first embodiment are detailed here-after.

In the embodiment of figure 5, the thrust disc 70 is mounted on an outer peripheral surface 42 of the insert 4 and against a radial outwardly extending shoulder 44 of the insert 4. The shoulder 44 extends axially between the thrust disc 70 and the shaft 3 hereby guaranteeing magnetic insulation of the shaft 3 from the thrust disc 70.

In the embodiment of figure 6, the insert 4 is sleeve shaped and mounted around an outer peripheral surface 34 of the shaft 3. The insert 4 comprises an outer peripheral surface 46 and a radially and outwardly extending shoulder 48. The thrust disc 70 is mounted on the outer surface 48 and against the shoulder 48, which thus extends axially between the thrust disc 70 and the shaft 3.

In this embodiment, the rotary machine 1 does not comprise any fastening bolt 32. The thrust disc 70 is fastened to the shaft 3 thanks to a supplementary magnetically insulating insert 6, which may be made of the same material as the insert 4, mounted on the outer surface 46 and against the thrust disc 70 on the opposite side of the thrust disc 70 with respect to the shoulder 78. A blocking element 36, which may be made of a standard metallic material, is mounted on the outer surface 34 of the shaft 3 and against the inserts 4 and 6 so as to block in axial translation the thrust disc 70. For instance, the blocking element 36 may be press fitted on the shaft 3.

According to a non-shown embodiment of the invention, the rotary machine 1' may comprise more than one axial magnetic bearing, more than one radial magnetic bearing or more than one sensing system.

The technical features of the embodiments and variants described here-above can be combined to form new embodiments of the invention.

## Claims

1. Rotary machine (1') comprising a shaft (3) and a housing (5), the shaft (3) being rotatable with respect to the housing (5) thanks to at least one axial magnetic bearing (7) including a magnetic thrust disc (70) coupled in rotation to the shaft (3) and magnetic actuators (72, 74) fixed to the housing (5) and located axially around the magnetic thrust disc (70), **characterised in that** it comprises a magnetically insulating insert (4) mounted between the magnetic thrust disc (70) and the shaft (3) so that there is no contact between the magnetic thrust disc (70) and the shaft (3).

2. Rotary machine according to claim 1, wherein the magnetically insulating insert (4) is made of material of low magnetic properties.

3. Rotary machine according to claim 2, wherein the magnetically insulating insert (4) is made of a material having a magnetic permeability equal or inferior to 1,256 × 10⁻⁶ H/m.

4. Rotary machine according to claim 3, wherein the magnetically insulating insert (4) is made of low magnetic permeability stainless steel.

5. Rotary machine according to claim 4, wherein the magnetically insulating insert (4) is made of 316L or 904L.

6. Rotary machine according to claim 3, wherein the magnetically insulating insert (4) is made of a non-ferrous material.

7. Rotary machine according to claim 6, wherein the magnetically insulating insert (4) is made of aluminum.

8. Rotary machine according to claim 6, wherein the magnetically insulating insert (4) is made of a plastic material.

9. Rotary machine according to claim 6, wherein the magnetically insulating insert (4) is made of a ceramic material.

10. Rotary machine according to any preceding claim, wherein the shaft (3) comprises a central threaded bore (30) in which a fastening bolt (32) is inserted, and wherein the magnetically insulating insert (4) and the thrust disc (70) each comprise a central hole (40, 700) for passing the fastening bolt (32).

11. Rotary machine according to any of claims 1 to 9, wherein the shaft (3) comprises a central threaded bore (30) in which a fastening bolt (32) is inserted, wherein the magnetically insulating insert (4) comprises a central hole (40) for passing the fastening bolt (32), wherein the magnetically insulating insert (4) comprises a radially outwardly extending shoulder (44), and wherein the thrust disc (70) is mounted on an outer peripheral surface (42) of the insert (4) and against the shoulder (44).

12. Rotary machine according to any of claims 1 to 9, wherein the magnetically insulating insert (4) is sleeve-shaped and mounted around an outer peripheral surface (34) of the shaft (3), wherein the magnetically insulating insert (4) comprises a radial outwardly shoulder (48), and wherein the thrust disc (70) is mounted on an outer peripheral surface (46) of the magnetically insulating insert (4) and against the shoulder (48).

13. Rotary machine according to any preceding claim, wherein it comprises at least one magnetic rotation sensing system (9) including a magnetic rotor (90) coupled in rotation to the shaft (3) and a magnetic stator (92) fixed to the housing (5).

14. Rotary machine according to any preceding claim, wherein it comprises at least one radial magnetic bearing (11) including a magnetic rotor (110) coupled in rotation to the shaft (3) and a magnetic stator (112) fixed to the housing (5).

15. Rotary machine according to any preceding claim, wherein it comprises at least one rolling bearing (13) for allowing rotation of the shaft (3) with respect to the housing (5) in case of failure of the axial magnetic bearing (7).

## Patentansprüche

1. Rotationsmaschine (1'), die eine Welle (3) und ein Gehäuse (5) umfasst, wobei die Welle (3) dank mindestens eines axialen Magnetlagers (7), das eine magnetische Druckscheibe (70), die drehbar mit der Welle (3) gekoppelt ist, und Magnetaktoren (72, 74), die am Gehäuse (5) fixiert sind und sich axial um die magnetische Druckscheibe (70) herum befinden, enthält, in Bezug zum Gehäuse (5) drehbar ist,
**dadurch gekennzeichnet, dass**
sie einen magnetisch isolierenden Einsatz (4) umfasst, der zwischen der magnetischen Druckscheibe (70) und der Welle (3) angeordnet ist, sodass sich die magnetische Druckscheibe (70) und die Welle (3) nicht berühren.

2. Rotationsmaschine nach Anspruch 1, wobei der magnetisch isolierende Einsatz (4) aus einem Material mit geringen magnetischen Eigenschaften gefertigt ist.

3. Rotationsmaschine nach Anspruch 2, wobei der magnetisch isolierende Einsatz (4) aus einem Material gefertigt ist, das eine magnetische Permeabilität aufweist, die kleiner gleich 1,256 × 10⁻⁶ H/m ist.

4. Rotationsmaschine nach Anspruch 3, wobei der magnetisch isolierende Einsatz (4) aus Edelstahl mit geringer magnetischer Permeabilität gefertigt ist.

5. Rotationsmaschine nach Anspruch 4, wobei der magnetisch isolierende Einsatz (4) aus 316L oder 904L gefertigt ist.

6. Rotationsmaschine nach Anspruch 3, wobei der magnetisch isolierende Einsatz (4) aus einem eisenfreien Material gefertigt ist.

7. Rotationsmaschine nach Anspruch 6, wobei der magnetisch isolierende Einsatz (4) aus Aluminium gefertigt ist.

8. Rotationsmaschine nach Anspruch 6, wobei der magnetisch isolierende Einsatz (4) aus einem Kunststoffmaterial gefertigt ist.

9. Rotationsmaschine nach Anspruch 6, wobei der magnetisch isolierende Einsatz (4) aus einem Keramikmaterial gefertigt ist.

10. Rotationsmaschine nach einem der vorstehenden Ansprüche, wobei die Welle (3) eine mittige Gewindebohrung (30) umfasst, in die ein Befestigungsbolzen (32) eingeführt ist, und wobei der magnetisch isolierende Einsatz (4) und die Druckscheibe (70) jeweils eine mittige Bohrung (40, 700) zum Durchführen des Befestigungsbolzens (32) umfassen.

11. Rotationsmaschine nach einem der Ansprüche 1 bis 9, wobei die Welle (3) eine mittige Gewindebohrung (30) umfasst, in die ein Befestigungsbolzen (32) eingeführt ist, wobei der magnetisch isolierende Einsatz (4) eine mittige Bohrung (40) zum Durchführen des Befestigungsbolzens (32) umfasst, wobei der magnetisch isolierende Einsatz (4) eine sich radial nach außen erstreckende Schulter (44) umfasst, und wobei die Druckscheibe (70) auf einer Außenumfangsfläche (42) des Einsatzes (4) und gegen die Schulter (44) montiert ist.

12. Rotationsmaschine nach einem der Ansprüche 1 bis 9, wobei der magnetisch isolierende Einsatz (4) hülsenförmig ist und um eine Außenumfangsfläche (34) der Welle (3) montiert ist, wobei der magnetisch isolierende Einsatz (4) eine sich radial nach außen erstreckende Schulter (48) umfasst, und wobei die Druckscheibe (70) auf einer Außenumfangsfläche (46) des magnetisch isolierenden Einsatzes (4) und gegen die Schulter (48) montiert ist.

13. Rotationsmaschine nach einem der vorstehenden Ansprüche, wobei diese mindestens ein magnetisches Rotationserfassungssystem (9) umfasst, das einen Magnetrotor (90), der mit der Welle (3) drehbar gekoppelt ist, und einen Magnetstator (92), der am Gehäuse (5) fixiert ist, enthält.

14. Rotationsmaschine nach einem der vorstehenden Ansprüche, wobei diese mindestens ein radiales Magnetlager (11) umfasst, das einen Magnetrotor (110), der mit der Welle (3) drehbar gekoppelt ist, und einen Magnetstator (112), der am Gehäuse (5) fixiert ist, enthält.

15. Rotationsmaschine nach einem der vorstehenden Ansprüche, wobei diese mindestens ein Wälzlager (13) umfasst, um die Drehung der Welle (3) in Bezug zum Gehäuse (5) bei Ausfall des axialen Magnetlagers (7) zu ermöglichen.

## Revendications

1. Machine rotative (1') comprenant un arbre (3) et un carter (5), l'arbre (3) pouvant tourner par rapport au carter (5) grâce à au moins un palier magnétique axial (7) comprenant un disque de poussée magnétique (70) couplé en rotation à l'arbre (3) et des actionneurs magnétiques (72, 74) fixés au carter (5) et placés axialement autour du disque de poussée magnétique (70),
**caractérisée en ce qu'**elle comprend un insert magnétiquement isolant (4) monté entre le disque de poussée magnétique (70) et l'arbre (3) de sorte qu'il n'y a aucun contact entre le disque de poussée magnétique (70) et l'arbre (3).

2. Machine rotative selon la revendication 1, dans laquelle l'insert magnétiquement isolant (4) est constitué d'un matériau à faibles propriétés magnétiques.

3. Machine rotative selon la revendication 2, dans laquelle l'insert magnétiquement isolant (4) est réalisé en un matériau ayant une perméabilité magnétique égale ou inférieure à 1,256 x 10⁻⁶H/m.

4. Machine rotative selon la revendication 3, dans laquelle l'insert magnétiquement isolant (4) est réalisé en acier inoxydable à faible perméabilité magnétique.

5. Machine rotative selon la revendication 4, dans laquelle l'insert magnétiquement isolant (4) est en 316L ou 904L.

6. Machine rotative selon la revendication 3, dans laquelle l'insert magnétiquement isolant (4) est réalisé en un matériau non ferreux.

7. Machine rotative selon la revendication 6, dans laquelle l'insert magnétiquement isolant (4) est en aluminium.

8. Machine rotative selon la revendication 6, dans laquelle l'insert magnétiquement isolant (4) est réalisé en matière plastique.

9. Machine rotative selon la revendication 6, dans laquelle l'insert magnétiquement isolant (4) est réalisé en un matériau céramique.

10. Machine rotative selon l'une quelconque des revendications précédentes, dans laquelle l'arbre (3) comprend un alésage central fileté (30) dans lequel un boulon de fixation (32) est inséré, et dans laquelle l'insert magnétiquement isolant (4) et le disque de poussée (70) comprennent chacun un trou central (40, 700) pour passer le boulon de fixation (32).

11. Machine rotative selon l'une quelconque des revendications 1 à 9, dans laquelle l'arbre (3) comprend un alésage central fileté (30) dans lequel un boulon de fixation (32) est inséré, dans laquelle l'insert magnétiquement isolant (4) comprend un trou central (40) pour faire passer le boulon de fixation (32), dans laquelle l'insert magnétiquement isolant (4) comprend un épaulement (44) s'étendant radialement vers l'extérieur et dans laquelle le disque de poussée (70) est monté sur une surface périphérique extérieure (42) de l'insert (4) et contre l'épaulement (44).

12. Machine rotative selon l'une quelconque des revendications 1 à 9, dans laquelle l'insert magnétiquement isolant (4) est en forme de manchon et monté autour d'une surface périphérique extérieure (34) de l'arbre (3), dans laquelle l'insert magnétiquement isolant (4) comprend un épaulement (48) s'étendant radialement vers l'extérieur, et dans laquelle le disque de poussée (70) est monté sur une surface périphérique extérieure (46) de l'insert magnétiquement isolant (4) et contre l'épaulement (48).

13. Machine rotative selon l'une quelconque des revendications précédentes, **caractérisée en ce qu'**elle comprend au moins un système de détection de rotation magnétique (9) comprenant un rotor magnétique (90) couplé en rotation à l'arbre (3) et un stator magnétique (92) fixé sur le carter (5).

14. Machine rotative selon l'une quelconque des revendications précédentes, **caractérisée en ce qu'**elle comprend au moins un palier magnétique radial (11) comportant un rotor magnétique (110) couplé en rotation à l'arbre (3) et un stator magnétique (112) fixé sur le carter (5).

15. Machine rotative selon l'une quelconque des revendications précédentes, **caractérisée en ce qu'**elle comprend au moins un palier à roulement (13) pour permettre la rotation de l'arbre (3) par rapport au carter (5) en cas de défaillance du palier magnétique axial (7).
